# EUROPÄISCHE PATENTSCHRIFT

(11) **EP 0 932 841 B1**
(45) Veröffentlichungstag und Bekanntmachung des Hinweises auf die Patenterteilung: **14.11.2001**
(21) Anmeldenummer: 97910367.8
(22) Anmeldetag: 26.09.1997
(51) Int. Cl.: G01T 1/11

(54) **FINGERRINGDOSIMETERSONDE**
FINGER RING DOSIMETER PROBE
SONDE DOSIMETRIQUE A BAGUE ANNULAIRE

(30) Priorität: 21.10.1996 DE 19643317
(43) Veröffentlichungstag der Anmeldung: 04.08.1999
(73) Patentinhaber: GSF-Forschungszentrum für Umwelt und Gesundheit GmbH, 85764 Neuherberg (DE)
(72) Erfinder: BRAND, Hans-Norbert, D-81241 München (DE); KREHBIEL, Günter, D-83026 Rosenheim (DE)
(86) Internationale Anmeldenummer: EP9705282
(87) Internationale Veröffentlichungsnummer: WO9818021

(56) Entgegenhaltungen:
- US-A- 3 983 717
- US-A- 4 506 157
- US-A- 4 698 505
- US-A- 5 179 281

## Beschreibung

Die erfindung betrifft eine Dosimetersonde nach dem Oberbegriff des Patentanspruchs 1, wie er aus der US-A-3983717 bekannt ist.

Im medizinischen Bereich (Nuklearmedizin, Röntgendiagnostik, interventionelle und chirurgische Radiologie) werden Teilkörperdosimeter nicht im erforderlichen Umfang eingesetzt, weil die angebotenen TL-Dosimetersonden den Bedürfnissen der Anwender nicht hinreichend entsprechen. Gerade dort können an Kopf und Extremitäten erhebliche Strahlenbelastungen auftreten und Überschreitungen der gesetzlich festgelegten Dosisgrenzwerte möglicherweise nicht erkannt werden. Diese Anwender benötigen geometrisch kleine Meßsonden, die ohne Verletzungen der Hand die Fingerbeweglichkeit beim Tragen, auch unter einem OP-Handschuh, nicht einschränken, desinfizierbar, z. T. auch sterilisierbar sind. Gleichzeitig müssen die meßtechnischen Anforderungen der PTB und der Eichordnung erfüllt und die Auswertung mit am Markt erhältlichen Geräten einfach möglich sein. Die Auswahl an derzeit kommerziell erhältlichen TL-Teilkörperdosimetersonden, die auch nur einem Teil dieser Anforderungen genügen, ist sehr beschränkt.

Des weiteren sind aus der US-A-4506157 und der US-A-4698505 Fingerringdosimeter mit gekapselten Dektoren bekannt ist.

Aufgabe der Erfindung ist es, eine Dosimetersonde der e. g. Art mit lichtdichter Verkapselung des Detektors bereit zu stellen.

Gelöst wird diese Aufgabe durch die Merkmale des Patentanspruchs 1. Die Unteransprüche beschreiben die vorteilhafte Ausgestaltung der Dosimetersonde.

Die entwickelte Dosimetersonde erfüllt die o. g. Bedürfnisse weitgehend. Als Detektormaterial wird LiF:Mg,Ti (TLD-100) verwendet, das in die Dosimeterhalterung dicht eingepreßt ist. Die Halterung besteht aus einem hautfreundlichen Kunststoff (Polyamid) und trägt eine wischfeste, maschinen- und klarschriftlesbare Identifizierungsnummer. Die Dosimetersonde ist wasserdicht, desinfizierbar, kalt sterilisierbar und mechanisch stabil. Die Sonde ist als offener Fingerring mit einem stufenlos verstellbaren, selbstsichernden Verschluß ausgebildet und kann über Zusatzbänder auch an anderen Körperstellen (Stirn, Arm, etc.) getragen werden. Sie zeichnet sich gegenüber herkömmlichen Systemen durch seine geringe Größe, das geringe Gewicht und die stufenlose Anpaßbarkeit an jede Fingerstärke aus. Vor allem in der interventionellen und chirurgischen Radiologie ist es auf Grund der flachen Bauweise möglich, den Ring ohne Einschränkung der Fingerbeweglichkeit unter dem OP-Handschuh zu tragen.

Die Dosimetersonde ist für den Einsatz im Photonenäquivalentdosis-Meßbereich 1 mSv < Hₓ < 10 Sv im Energiebereich 15 keV < E < 1,3 MeV mit Strahleneinfallsrichtungen von 45° geeignet und erfüllt die Anforderungen für Teilkörperdosimeter nach DIN 6816, PTB-A 23.2.1. und § 2, Abs. 3 Satz 4 der Eichordnung.

Die Erfindung wird im folgenden an Hand eines Ausführungsbeispiels mit Hilfe der Figuren näher erläutert. Dabei zeigt Fig. 1 eine Seitenansicht, Fig. 2 eine Draufsicht und Fig. 3 einen Schnitt der Dosimetersonde.

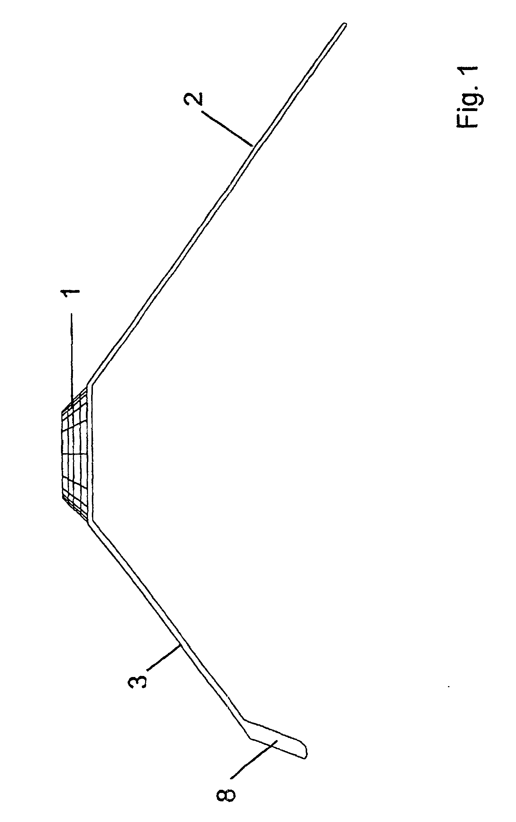

Fig. 1 stellt das aus Polyamid gefertigte Gehäuse 1 mit den Schenkeln 2, 3 in der Seitenansicht dar. Die sägezahnförmigen Riffelungen auf der Ober- und Unterseite von Schenkel 2 und an der Unterseite von Schenkel 3 sind hier nicht dargestellt. Am freien Ende des Schenkels 3 befindet sich eine Öse 8 zum Verschließen der beiden Schenkel 2, 3. Die Öse enthält eine sägezahnförmige Riffelung und eine Sperrklinke, hier ebenfalls nicht dargestellt. Im geschlossenen Zustand der Schenkel 2, 3 greifen die Riffelung auf der Unterseite von Schenkel 3 und die Riffelung auf der Oberseite von Schenkel 2 ineinander.

Riffelung und Sperrklinke an der Öse 8 greifen im geschlossenen Zustand der Schenkel 2, 3 in die Riffelung auf der Unterseite des Schenkels 2 ein.

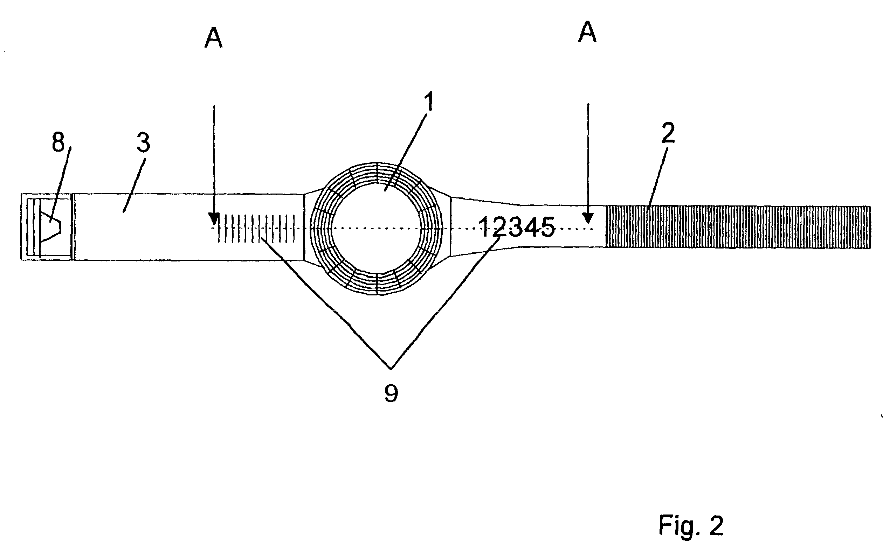

Fig. 2 stellt die Draufsicht der Dosimetersonde dar. Dabei ist eine abriebfeste beispielhafte Kennzeichnung 9 auf den Schenkeln 2,3 eingezeichnet. Die Öse 8 an Ende des Schenkels 3 zeigt die Riffelung und die Sperrklinke. An Schenkel 2 ist die sägezahnförmige Riffelung angedeutet.

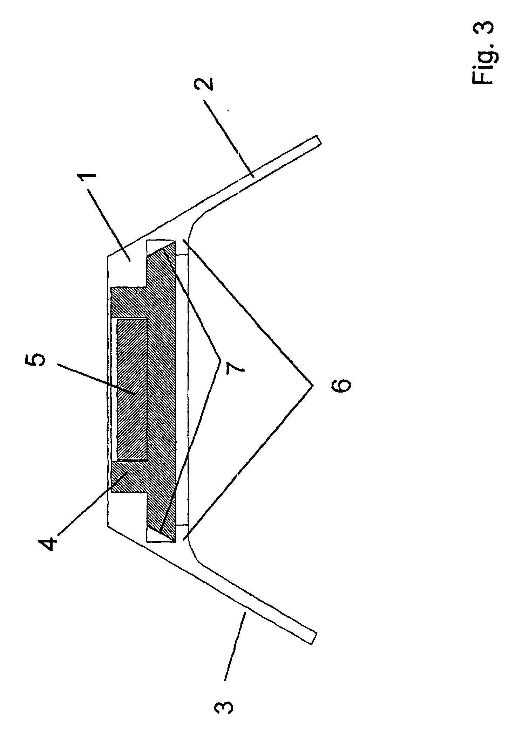

Fig. 3 stellt die Schnittansicht des Mittelteils der Dosimetersonde dar. Dabei ist der Deckel 4, in dem der Detektor 5 gelagert ist, in das Gehäuse 1 mit den angedeuteten Schenkeln 2, 3 dicht und formschlüssig eingepreßt. Die Ausnehmung im Gehäuse 1 ist zylinderförmig und im Zentrum dieses Hohlzylinders ist ein Sackloch angeordnet. Der Boden des Sackloches soll nicht dicker sein als 0,3 mm wodurch die Messung niederenergetischer Strahlung möglich ist. Die untere Öffnung des Hohlzylinders ist durch einen Ring 6 mit rechteckigem Profil verengt. Durch diesen Ring 6 wird ein fester Sitz des Deckels gewährleistet. Der Deckel 4 ist eine Kreisscheibe mit aufgesetztem, zentrierten Kreisring zur Aufnahme des Thermolumineszenzdetektors 5. Die nach oben weisende Fläche der Kreisscheibe und die Stirnfläche und die Außenwand des Kreisringes bilden im Zusammenwirken mit den entsprechenden Gehäuseinnenflächen eine zusätzliche Dichtung. Die Kreisscheibe des Deckels 4 trägt auf der Oberseite eine Anfasung 7, die als Zentrierhilfe zum Einpassen des Deckels 4 in das Gehäuse 1 dient.

Ein besonders geeignetes Material für Gehäuse 1 mit Schenkeln 2, 3 und für den Deckel 4 ist Polyamid. Andere hydrophobe Materialien wie Teflon sind auch möglich.

## Patentansprüche

1. Dosimetersonde, bestehend aus einem Gehäuse (1) mit zwei direkt am Gehäuse angebrachten Schenkeln (2, 3), einem Thermolumineszenzdetektor (5), der in einer Ausnehmnung des Gehäuses (1) gehaltert ist und einem Deckel (4) aus Polymermaterial, welcher derart formschlüssig in die Ausnehmung des Gehäuses (1) einpreßbar ist, daß der Thermolumineszenzdetektor (5) lichtdicht verschlossen ist, **dadurch gekennzeichnet, daß**:
a) das Gehäuse (1), der Deckel (4) und die Schenkel (2, 3) aus Polymermaterial gefertigt sind,
b) die Ausnehmung im Gehäuse (1) zylinderförmig ist, wobei in deren Zentrum ein Sackloch angeordnet ist und daß die Öffnung der Ausnehmung durch einen Ring (6) mit rechteckigem Profil verengt ist,
c) der Deckel (4) eine Kreisscheibe mit aufgesetzem zentrierten Kreisring, in dem der Thermolumineszenzdetektor (5) aufgesetzem ist, ist und
d) die Kreisscheibe des Deckels (4) an der Oberseite eine Anfasung (7) trägt, wobei die entsprechenden Flächen des Deckels (4) und der Ausnehmung im Zusammenwirken eine zusätzliche Dichtung bilden und wobei die Kreisscheibe mittels des Ringes (6) in der Ausnehmung einrastet.

2. Dosimetersonde nach Anspruch 1, **dadurch gekennzeichnet, daß** der Schenkel (2) auf der Ober- und Unterseite und der Schenkel (3) auf der Unterseite eine sägezahnförmige Riffelung trägt, wobei im geschlossenen Zustand der Schenkel (2, 3) die Riffelung auf der Unterseite von Schenkel (3) und die Riffelung auf der Oberseite von Schenkel (2) ineinander greifen.

3. Dosimetersonde nach Anspruch 1 oder 2, **dadurch gekennzeichnet, daß** der Schenkel (3) an seinem Ende eine Öse (8) mit sägezahnförmiger Riffelung und Sperrklinke trägt, wobei Riffelung und Sperrklinke im geschlossenen Zustand der Schenkel (2, 3) in die Riffelung auf der Unterseite des Schenkels (2) (2, 3) in die Riffelung auf der Unterseite des Schenkels (2) eingreifen.

4. Dosimetersonde nach einem der Ansprüche 1 bis 3, **dadurch gekennzeichnet, daß** der Boden des Sackloches im Gehäuse (1) nicht dicker ist als 0,3 mm.

5. Dosimetersonde nach einem der Ansprüche 1 bis 4, **dadurch gekennzeichnet, daß** Gehäuse (1), Schenkel (2, 3) und Deckel (4) aus Polyamid bestehen.

6. Dosimetersonde nach einem der Ansprüche 1 bis 5, **dadurch gekennzeichnet, daß** die Schenkel (2, 3) eine abriebfeste Kennzeichnung (9) tragen.

## Claims

1. Dosimeter probe, comprising a housing (I) with two legs (2, 3) mounted directly on the housing, a thermoluminescence detector (5) which is supported in a recess of the housing (1), and a cover (4) which is formed from polymeric material and can be pressed into the recess of the housing (1) in a form-fitting manner so that the thermoluminescence detector (5) is sealed in a light-proof manner, **characterised in that**:
a) the housing (1), the cover (4) and the legs (2, 3) are manufactured from polymeric material,
b) the recess in the housing (1) is cylindrical, a blind hole being disposed in the centre of said recess, and **in that** the opening of the recess is constricted by a ring (6) having a rectangular profile,
c) the cover (4) is a circular disc with a centred circular ring placed thereon, the thermoluminescence detector (5) being accommodated in said ring, and
d) the circular disc of the cover (4) has a chamfer (7) on its upper side, the corresponding faces of the cover (4) and of the recess forming an additional seal when said faces co-operate with each other, and the circular disc locking in the recess by means of the ring (6).

2. Dosimeter probe according to claim 1, **characterised in that** the leg (2) has a sawtooth-like grooving on the upper side and underside, and the leg (3) has a sawtooth-like grooving on the underside, the grooving on the underside of leg (3) and the grooving on the upper side of leg (2) engaging in each other when the legs (2, 3) are in their closed position.

3. Dosimeter probe according to claim 1 or 2, **characterised in that** the leg (3) has, at its end, an eyelet (8) with sawtooth-like grooving and locking pawl, the grooving and locking pawl engaging in the grooving on the underside of the leg (2) when the legs (2, 3) are in their closed position.

4. Dosimeter probe according to one of claims 1 to 3, **characterised in that** the base of the blind hole in the housing (1) is not thicker than 0.3 mm.

5. Dosimeter probe according to one of claims 1 to 4, **characterised in that** housing (1), legs (2, 3) and cover (4) are formed from polyamide.

6. Dosimeter probe according to one of claims 1 to 5, **characterised in that** the legs (2, 3) have an abrasion-proof identification mark (9).

## Revendications

1. Sonde dosimétrique constituée d'un boîtier (1) portant directement deux branches (2, 3), d'un détecteur thermoluminescent (5) logé dans un évidement du boîtier (1) et d'un couvercle (4) en matériau polymère qui peut être inséré à force et verrouillé par combinaison de formes dans l'évidement du boîtier (1) de sorte que le détecteur thermoluminescent (5) est enfermé à l'abri de la lumière,
**caractérisée en ce que**
a) le boîtier (1), le couvercle (4) et les branches (2, 3) sont fabriqués en un matériau polymère,
b) l'évidement du boîtier (1) a la forme d'un cylindre au centre duquel se trouve un trou borgne et l'ouverture de l'évidement est réduite par un anneau (6) à profil rectangulaire,
c) le couvercle (4) est un disque circulaire présentant en haut une bague circulaire centrée, dans laquelle est logé le détecteur thermoluminescent (5), et
d) le disque circulaire du couvercle (4) porte sur sa face supérieure un chanfrein (7) et les parties correspondantes du couvercle (4) et de l'évidement créent en coopération une étanchéité supplémentaire, le disque circulaire étant bloqué par l'anneau (6) dans l'évidement.

2. Sonde dosimétrique selon la revendication 1,
**caractérisée en ce que**
la branche (2) sur ses faces supérieure et inférieure et la branche (3) sur sa face inférieure présentent des cannelures en forme de dents de scie, de sorte que quand les branches (2, 3) sont fermées, la cannelure sur la face inférieure de la branche (3) et celle sur la face supérieure de la branche (2) sont en prise l'une dans l'autre.

3. Sonde selon l'une quelconque des revendications 1 ou 2,
**caractérisée en ce que**
la branche (3) porte à son extrémité un oeil (8) avec une cannelure en dents de scie et un cliquet d'arrêt qui, quand les branches (2, 3) sont fermées, sont en prise respectivement dans la cannelure de la face inférieure de la branche (2).

4. Sonde selon l'une quelconque des revendications 1 à 3,
**caractérisée en ce que**
le fond du trou borgne dans le boîtier (1) n'est pas plus épais que 0,3 mm.

5. Sonde selon l'une quelconque des revendications 1 à 4,
**caractérisée en ce que**
le boîtier (1), les branches (2, 3) et le couvercle (4) sont en polyamide.

6. Sonde selon l'une quelconque des revendications 1 à 5,
**caractérisée en ce que**
les branches (2, 3) portent une caractérisation (9) résistant à l'abrasion.
